# EUROPEAN PATENT APPLICATION

(11) **EP 2 693 396 A1**
(43) Date of publication of application: **05.02.2014**
(21) Application number: 13177382.2
(22) Date of filing: 22.07.2013
(51) Int. Cl.: G06T 3/40

(54) **Method, apparatus and computer program product for processing of multimedia content**

(30) Priority: 30.07.2012 IN CH31172012
(71) Applicant: Nokia Corporation, 02150 Espoo (FI)
(72) Inventor: S V, Basavaraja, Karnataka State 560003 Bangalore (IN); Uliyar, Mithun, Karnataka State 560061 Bangalore (IN); Putraya, Gururaj, Karanataka State 560103 Bangalore (IN)
(74) Representative: Nokia Corporation

(57) **Abstract**

In accordance with an example embodiment a method, apparatus and computer program product are provided. The method comprises receiving a first image of a scene, the first image comprising angular information associated with the scene. The first image has a first image resolution. A second image of the scene is received. The second image has a second image resolution, wherein the second image resolution is greater than the first image resolution. A pre-processed first image is generated based on the angular information and a selection of a first region of interest (ROI) in the first image. A processed first image of the scene is generated based on a processing of a second ROI in the pre-processed first image corresponding to the first ROI in the first image, and the second image. The processing is configured to render the second image resolution to the second ROI in the pre-processed first image.

## Description

### TECHNICAL FIELD

Various implementations relate generally to method, apparatus, and computer program product for processing of multimedia content.

### BACKGROUND

The rapid advancement in technology related to capturing multimedia content, such as images and videos has resulted in an exponential increase in the creation of image content. Various devices like mobile phones and personal digital assistants (PDA) are being configured with image/video capture capabilities, thereby facilitating easy capture of the multimedia content such as images/videos. The captured images may be subjected to processing based on various user needs. For example, images captured corresponding to a scene may be edited or processed to generate an image illustrating various angular and/or spatial details of the scene.

### SUMMARY OF SOME EMBODIMENTS

Various aspects of example embodiments are set out in the claims.

In a first aspect, there is provided a method comprising: receiving a first image of a scene, the first image comprising an angular information associated with the scene, the first image having a first image resolution; receiving a second image of the scene, the second image having a second image resolution, the second image resolution being greater than the first image resolution; generating a pre-processed first image based on the angular information and a selection of a first region of interest (ROI) in the first image; and generating a processed first image of the scene based on a processing of a second ROI in the pre-processed first image corresponding to the first ROI in the first image, and the second image, wherein the processing is configured to render the second image resolution to the second ROI in the pre-processed first image.

In a second aspect, there is provided an apparatus comprising at least one processor; and at least one memory comprising computer program code, the at least one memory and the computer program code configured to, with the at least one processor, cause the apparatus to at least perform: receive a first image of a scene, the first image comprising an angular information associated with the scene, the first image having a first image resolution; receive a second image of the scene, the second image having a second image resolution, the second image resolution being greater than the first image resolution; generate a pre-processed first image based on the angular information and a selection of a first region of interest (ROI) in the first image; and generate a processed first image of the scene based on a processing of a second ROI in the pre-processed first image corresponding to the first ROI in the first image, and the second image, wherein the processing is configured to render the second image resolution to the second ROI in the pre-processed first image.

In a third aspect, there is provided a computer program product comprising at least one computer-readable storage medium, the computer-readable storage medium comprising a set of instructions, which, when executed by one or more processors, cause an apparatus to at least perform: receive a first image of a scene, the first image comprising an angular information associated with the scene, the first image having a first image resolution; receive a second image of the scene, the second image having a second image resolution, the second image resolution being greater than the first image resolution; generate a pre-processed first image based on the angular information and a selection of a first region of interest (ROI) in the first image; and generate a processed first image of the scene based on a processing of a second ROI in the pre-processed first image corresponding to the first ROI in the first image, and the second image, wherein the processing is configured to render the second image resolution to the second ROI in the pre-processed first image.

In a fourth aspect, there is provided an apparatus comprising: means for receiving a first image of a scene, the first image comprising an angular information associated with the scene, the first image having a first image resolution; means for receiving a second image of the scene, the second image having a second image resolution, the second image resolution being greater than the first image resolution; means for generating a pre-processed first image based on the angular information and a selection of a first region of interest (ROI) in the first image; and means for generating a processed first image of the scene based on a processing of a second ROI in the pre-processed first image corresponding to the first ROI in the first image, and the second image, wherein the processing is configured to render the second image resolution to the second ROI in the pre-processed first image.

In a fifth aspect, there is provided a computer program comprising program instructions which when executed by an apparatus, cause the apparatus to: receive a first image of a scene, the first image comprising an angular information associated with the scene, the first image having a first image resolution; receive a second image of the scene, the second image having a second image resolution, the second image resolution being greater than the first image resolution; generate a pre-processed first image based on the angular information and a selection of a first region of interest (ROI) in the first image; and generate a processed first image of the scene based on a processing of a second ROI in the pre-processed first image corresponding to the first ROI in the first image, and the second image, wherein the processing is configured to render the second image resolution to the second ROI in the pre-processed first image.

### BRIEF DESCRIPTION OF THE FIGURES

Various embodiments are illustrated by way of example, and not by way of limitation, in the figures of the accompanying drawings in which:

FIGURES 1 illustrate an example first image in accordance with an example embodiment;

FIGURE 2 illustrates a device for processing of multimedia content in accordance with an example embodiment;

FIGURE 3 illustrates an apparatus for processing of multimedia content in accordance with an example embodiment;

FIGURES 4A, 4B, and 4C illustrate example configurations of a device for capturing the first image and the second image, respectively in accordance with example embodiments;

FIGURE 5A, 5B and 5C illustrate example pre-processed first images in accordance with an example embodiment;

FIGURE 6A, 6B, 6C, 6D and 6E illustrate example images for processing of images associated with a multimedia content in accordance with an example embodiment;

FIGURE 7 illustrates a flowchart depicting an example method for processing of images associated with a multimedia content in accordance with an example embodiment; and

FIGURE 8 illustrates a flowchart depicting an example method for processing of images associated with a multimedia content in accordance with an example embodiment.

### DETAILED DESCRIPTION

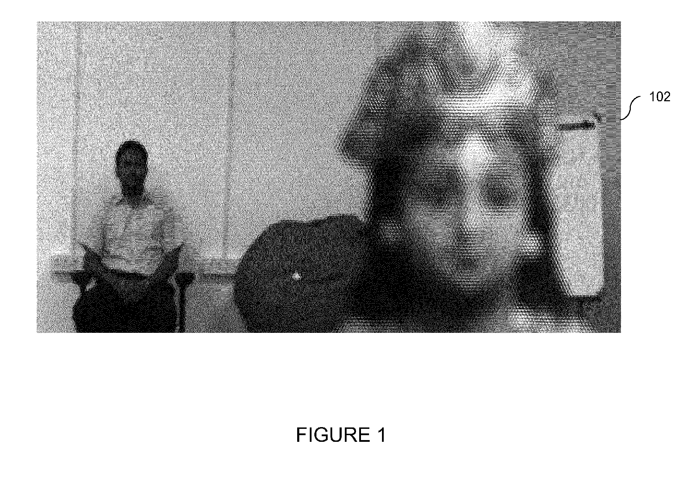

Example embodiments and their potential effects are understood by referring to FIGURES 1 through 8 of the drawings.

Various embodiments relate to processing of multimedia content to generate a processed multimedia content. In an embodiment, the multimedia content may include images, video content and the like. In an embodiment, the processing of the multimedia content may include generation of a processed image based on a processing of a first image and a second image associated with a scene. In an embodiment, the first image may include an angular information of the scene. In an embodiment, the first image may be a light-field image.

In an embodiment, the first image may be captured by utilizing a light-field image capturing device, such as a plenoptic camera. In an embodiment, the first image may have a first image resolution while the second image may have a second image resolution such that the second image resolution is greater than the first image resolution. As used herein, the term 'image resolution' may be construed as referring to the amount of details that may be contained in an image. In an embodiment, the term higher image resolution may refer to more image details, while the term lower image resolution may refer to lesser image details. In an embodiment, the image resolution or the image details may be measured in terms of density of lines and/or line pairs per unit length in the image while being visibly resolved. As used herein, the terms 'light-field image' may refer to an infinite collection of vectors representative of the light converging at a point from all possible angles in three dimension (3D). A light-field image is a complete representation of a visual scene and contains all possible views of the scene. The light-field image comprises an angular information, for example, a four dimension (4D) information of all the light rays associated with the scene in 3D. An exemplary light-field image is illustrated with reference to FIGURE 1. In an embodiment, based on the processing of the first image and the second image, the processed image may be a light field image having a high image resolution.

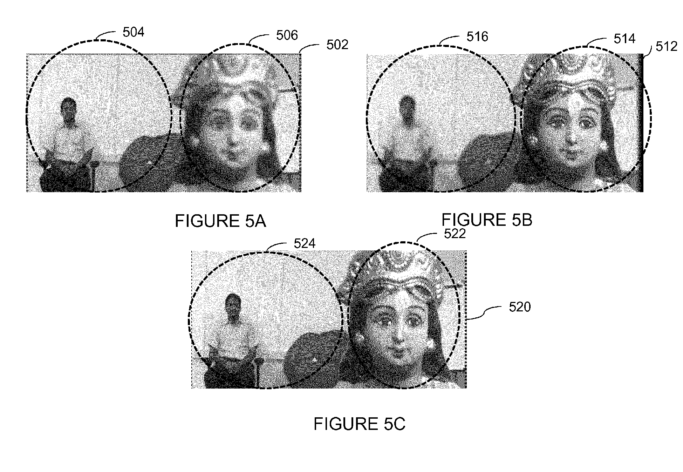

FIGURE 1 illustrates an example of a light-field image 102 in accordance with an embodiment. As illustrated herein, the light-field image 102 comprises a 2D image that includes a plurality of small images associated with a scene. The plurality of small images may be termed as an array of "micro-images". In an embodiment, each of the micro-images associated with the scene may comprise angular information associated with the scene. In an embodiment, the angular information may be in form of a plurality of pixels. In an embodiment, a device configured to capture the light-field image (for example a light-field camera) may include an array of micro lenses that enables the light-field camera to record not only image intensity, but also the distribution of intensity in different directions at each point. For generating an image from the light-field image, pixels from each micro-image may be selected. Examples of such images generated from a light-field image are illustrated with reference to FIGURES 5A, 5B and 5C.

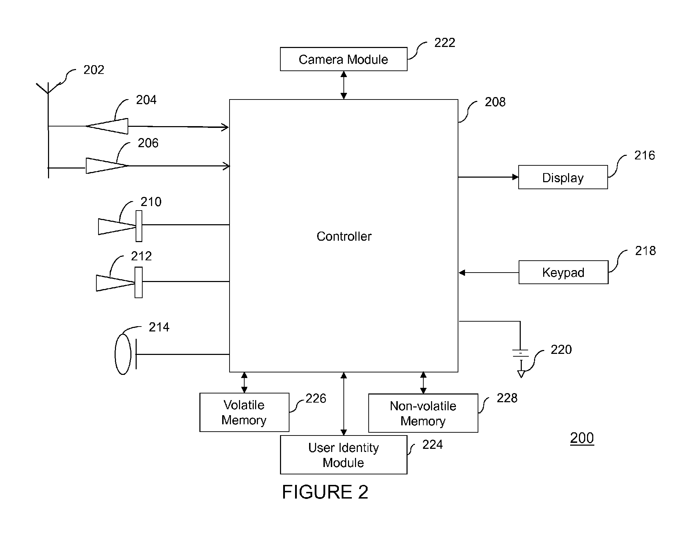

FIGURE 2 illustrates a device 200 in accordance with an example embodiment. It should be understood, however, that the device 200 as illustrated and hereinafter described is merely illustrative of one type of device that may benefit from various embodiments, therefore, should not be taken to limit the scope of the embodiments. As such, it should be appreciated that at least some of the components described below in connection with the device 200 may be optional and thus in an example embodiment may include more, less or different components than those described in connection with the example embodiment of FIGURE 1. The device 200 could be any of a number of types of mobile electronic devices, for example, portable digital assistants (PDAs), pagers, mobile televisions, gaming devices, cellular phones, all types of computers (for example, laptops, mobile computers or desktops), cameras, audio/video players, radios, global positioning system (GPS) devices, media players, mobile digital assistants, or any combination of the aforementioned, and other types of communications devices.

The device 200 may include an antenna 202 (or multiple antennas) in operable communication with a transmitter 204 and a receiver 206. The device 200 may further include an apparatus, such as a controller 208 or other processing device that provides signals to and receives signals from the transmitter 204 and receiver 206, respectively. The signals may include signaling information in accordance with the air interface standard of the applicable cellular system, and/or may also include data corresponding to user speech, received data and/or user generated data. In this regard, the device 200 may be capable of operating with one or more air interface standards, communication protocols, modulation types, and access types. By way of illustration, the device 200 may be capable of operating in accordance with any of a number of first, second, third and/or fourth-generation communication protocols or the like. For example, the device 200 may be capable of operating in accordance with second-generation (2G) wireless communication protocols IS-136 (time division multiple access (TDMA)), GSM (global system for mobile communication), and IS-95 (code division multiple access (CDMA)), or with third-generation (3G) wireless communication protocols, such as Universal Mobile Telecommunications System (UMTS), CDMA2000, wideband CDMA (WCDMA) and time division-synchronous CDMA (TD-SCDMA), with 3.9G wireless communication protocol such as evolved- universal terrestrial radio access network (E-UTRAN), with fourth-generation (4G) wireless communication protocols, or the like. As an alternative (or additionally), the device 200 may be capable of operating in accordance with non-cellular communication mechanisms. For example, computer networks such as the Internet, local area network, wide area networks, and the like; short range wireless communication networks such as Bluetooth® networks, Zigbee® networks, Institute of Electric and Electronic Engineers (IEEE) 802.11x networks, and the like; wireline telecommunication networks such as public switched telephone network (PSTN).

The controller 208 may include circuitry implementing, among others, audio and logic functions of the device 200. For example, the controller 208 may include, but are not limited to, one or more digital signal processor devices, one or more microprocessor devices, one or more processor(s) with accompanying digital signal processor(s), one or more processor(s) without accompanying digital signal processor(s), one or more special-purpose computer chips, one or more field-programmable gate arrays (FPGAs), one or more controllers, one or more application-specific integrated circuits (ASICs), one or more computer(s), various analog to digital converters, digital to analog converters, and/or other support circuits. Control and signal processing functions of the device 200 are allocated between these devices according to their respective capabilities. The controller 208 thus may also include the functionality to convolutionally encode and interleave message and data prior to modulation and transmission. The controller 208 may additionally include an internal voice coder, and may include an internal data modem. Further, the controller 208 may include functionality to operate one or more software programs, which may be stored in a memory. For example, the controller 208 may be capable of operating a connectivity program, such as a conventional Web browser. The connectivity program may then allow the device 200 to transmit and receive Web content, such as location-based content and/or other web page content, according to a Wireless Application Protocol (WAP), Hypertext Transfer Protocol (HTTP) and/or the like. In an example embodiment, the controller 208 may be embodied as a multi-core processor such as a dual or quad core processor. However, any number of processors may be included in the controller 208.

The device 200 may also comprise a user interface including an output device such as a ringer 210, an earphone or speaker 212, a microphone 214, a display 216, and a user input interface, which may be coupled to the controller 208. The user input interface, which allows the device 200 to receive data, may include any of a number of devices allowing the device 200 to receive data, such as a keypad 218, a touch display, a microphone or other input device. In embodiments including the keypad 218, the keypad 218 may include numeric (0-9) and related keys (#, *), and other hard and soft keys used for operating the device 200. Alternatively or additionally, the keypad 218 may include a conventional QWERTY keypad arrangement. The keypad 218 may also include various soft keys with associated functions. In addition, or alternatively, the device 200 may include an interface device such as a joystick or other user input interface. The device 200 further includes a battery 220, such as a vibrating battery pack, for powering various circuits that are used to operate the device 200, as well as optionally providing mechanical vibration as a detectable output.

In an example embodiment, the device 200 includes a media capturing element, such as a camera, video and/or audio module, in communication with the controller 208. The media capturing element may be any means for capturing an image, video and/or audio for storage, display or transmission. In an example embodiment, the media capturing element is a camera module 222 which may include a digital camera capable of forming a digital image file from a captured image. As such, the camera module 222 includes all hardware, such as a lens or other optical component(s), and software for creating a digital image file from a captured image. Alternatively or additionally, the camera module 222 may include the hardware needed to view an image, while a memory device of the device 200 stores instructions for execution by the controller 208 in the form of software to create a digital image file from a captured image. In an example embodiment, the camera module 222 may further include a processing element such as a co-processor, which assists the controller 208 in processing image data and an encoder and/or decoder for compressing and/or decompressing image data. In an embodiment, the processor may be configured to perform processing of the co-processor. For example, the processor may facilitate the co-processor to process the image data and the encoder and/or the decoder. The encoder and/or decoder may encode and/or decode according to a JPEG standard format or another like format. For video, the encoder and/or decoder may employ any of a plurality of standard formats such as, for example, standards associated with H.261, H.262/ MPEG-2, H.263, H.264, H.264/MPEG-4, MPEG-4, and the like. In some cases, the camera module 222 may provide live image data to the display 216. In an example embodiment, the display 216 may be located on one side of the device 200 and the camera module 222 may include a lens positioned on the opposite side of the device 200 with respect to the display 216 to enable the camera module 222 to capture images on one side of the device 200 and present a view of such images to the user positioned on the other side of the device 200.

The device 200 may further include a user identity module (UIM) 224. The UIM 224 may be a memory device having a processor built in. The UIM 224 may include, for example, a subscriber identity module (SIM), a universal integrated circuit card (UICC), a universal subscriber identity module (USIM), a removable user identity module (R-UIM), or any other smart card. The UIM 224 typically stores information elements related to a mobile subscriber. In addition to the UIM 224, the device 200 may be equipped with memory. For example, the device 200 may include volatile memory 226, such as volatile random access memory (RAM) including a cache area for the temporary storage of data. The device 200 may also include other non-volatile memory 228, which may be embedded and/or may be removable. The non-volatile memory 228 may additionally or alternatively comprise an electrically erasable programmable read only memory (EEPROM), flash memory, hard drive, or the like. The memories may store any number of pieces of information, and data, used by the device 200 to implement the functions of the device 200.

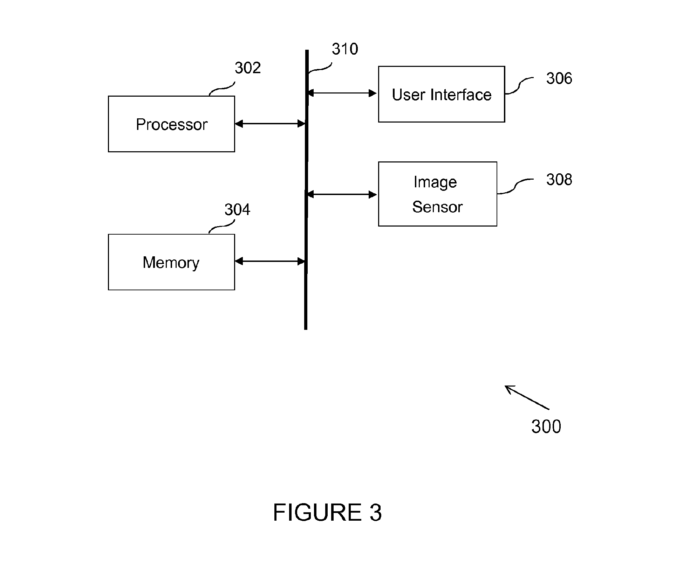

FIGURE 3 illustrates an apparatus 300 for processing of multimedia content in accordance with an example embodiment. The apparatus 300 for processing of multimedia content may be employed, for example, in the device 200 of FIGURE 2. However, it should be noted that the apparatus 300, may also be employed on a variety of other devices both mobile and fixed, and therefore, embodiments should not be limited to application on devices such as the device 200 of FIGURE 2. Alternatively, embodiments may be employed on a combination of devices including, for example, those listed above. Accordingly, various embodiments may be embodied wholly at a single device, (for example, the device 200 or in a combination of devices). It should also be noted that the devices or elements described below may not be mandatory and thus some may be omitted in certain embodiments.

The apparatus 300 includes or otherwise is in communication with at least one processor 302 and at least one memory 304. Examples of the at least one memory 304 include, but are not limited to, volatile and/or non-volatile memories. Some examples of the volatile memory include, but are not limited to, random access memory, dynamic random access memory, static random access memory, and the like. Some example of the non-volatile memory includes, but are not limited to, hard disks, magnetic tapes, optical disks, programmable read only memory, erasable programmable read only memory, electrically erasable programmable read only memory, flash memory, and the like. The memory 304 may be configured to store information, data, applications, instructions or the like for enabling the apparatus 300 to carry out various functions in accordance with various example embodiments. For example, the memory 304 may be configured to buffer input data comprising multimedia content for processing by the processor 302. Additionally or alternatively, the memory 304 may be configured to store instructions for execution by the processor 302.

An example of the processor 302 may include the controller 208. The processor 302 may be embodied in a number of different ways. The processor 302 may be embodied as a multi-core processor, a single core processor; or combination of multi-core processors and single core processors. For example, the processor 302 may be embodied as one or more of various processing means such as a coprocessor, a microprocessor, a controller, a digital signal processor (DSP), processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like. In an example embodiment, the multi-core processor may be configured to execute instructions stored in the memory 304 or otherwise accessible to the processor 302. Alternatively or additionally, the processor 302 may be configured to execute hard coded functionality. As such, whether configured by hardware or software methods, or by a combination thereof, the processor 302 may represent an entity, for example, physically embodied in circuitry, capable of performing operations according to various embodiments while configured accordingly. For example, if the processor 302 is embodied as two or more of an ASIC, FPGA or the like, the processor 302 may be specifically configured hardware for conducting the operations described herein. Alternatively, as another example, if the processor 302 is embodied as an executor of software instructions, the instructions may specifically configure the processor 302 to perform the algorithms and/or operations described herein when the instructions are executed. However, in some cases, the processor 302 may be a processor of a specific device, for example, a mobile terminal or network device adapted for employing embodiments by further configuration of the processor 302 by instructions for performing the algorithms and/or operations described herein. The processor 302 may include, among other things, a clock, an arithmetic logic unit (ALU) and logic gates configured to support operation of the processor 302.

A user interface 306 may be in communication with the processor 302. Examples of the user interface 306 include, but are not limited to, input interface and/or output user interface. The input interface is configured to receive an indication of a user input. The output user interface provides an audible, visual, mechanical or other output and/or feedback to the user. Examples of the input interface may include, but are not limited to, a keyboard, a mouse, a joystick, a keypad, a touch screen, soft keys, and the like. Examples of the output interface may include, but are not limited to, a display such as light emitting diode display, thin-film transistor (TFT) display, liquid crystal displays, active-matrix organic light-emitting diode (AMOLED) display, a microphone, a speaker, ringers, vibrators, and the like. In an example embodiment, the user interface 306 may include, among other devices or elements, any or all of a speaker, a microphone, a display, and a keyboard, touch screen, or the like. In this regard, for example, the processor 302 may comprise user interface circuitry configured to control at least some functions of one or more elements of the user interface 306, such as, for example, a speaker, ringer, microphone, display, and/or the like. The processor 302 and/or user interface circuitry comprising the processor 302 may be configured to control one or more functions of one or more elements of the user interface 306 through computer program instructions, for example, software and/or firmware, stored on a memory, for example, the at least one memory 304, and/or the like, accessible to the processor 302.

In an example embodiment, the apparatus 300 may include an electronic device. Some examples of the electronic device include communication device, media capturing device with communication capabilities, computing devices, and the like. Some examples of the communication device may include a mobile phone, a personal digital assistant (PDA), and the like. Some examples of computing device may include a laptop, a personal computer, and the like. In an example embodiment, the communication device may include a user interface, for example, the UI 306, having user interface circuitry and user interface software configured to facilitate a user to control at least one function of the communication device through use of a display and further configured to respond to user inputs. In an example embodiment, the communication device may include a display circuitry configured to display at least a portion of the user interface of the communication device. The display and display circuitry may be configured to facilitate the user to control at least one function of the communication device.

In an example embodiment, the communication device may be embodied as to include a transceiver. The transceiver may be any device operating or circuitry operating in accordance with software or otherwise embodied in hardware or a combination of hardware and software. For example, the processor 302 operating under software control, or the processor 302 embodied as an ASIC or FPGA specifically configured to perform the operations described herein, or a combination thereof, thereby configures the apparatus or circuitry to perform the functions of the transceiver. The transceiver may be configured to receive multimedia content. Examples of multimedia content may include audio content, video content, data, and a combination thereof.

In an example embodiment, the communication device may be embodied as to include an image sensor, such as an image sensor 308. The image sensor 308 may be in communication with the processor 302 and/or other components of the apparatus 300. The image sensor 308 may be in communication with other imaging circuitries and/or software, and is configured to capture digital images or to make a video or other graphic media files. The image sensor 308 and other circuitries, in combination, may be an example of the camera module 222 of the device 200.

The components 302-308 may communicate with each other via a centralized circuit system 310 to perform generation of the processed multimedia content. The centralized circuit system 310 may be various devices configured to, among other things, provide or enable communication between the components 302-308 of the apparatus 300. In certain embodiments, the centralized circuit system 310 may be a central printed circuit board (PCB) such as a motherboard, main board, system board, or logic board. The centralized circuit system 310 may also, or alternatively, include other printed circuit assemblies (PCAs) or communication channel media.

In an example embodiment, the processor 302 is caused to, with the content of the memory 304, and optionally with other components described herein, to cause the apparatus 300 to process the multimedia content. In an embodiment, the multimedia content may be pre-recorded and stored in the apparatus 300. In another embodiment, the multimedia content may be captured by utilizing the camera module 222 of the device 200, and stored in the memory of the device 200. In yet another embodiment, the device 200 may receive the multimedia content from internal memory such as hard drive, random access memory (RAM) of the apparatus 300, or from external storage medium such as digital versatile disk, compact disk, flash drive, memory card, or from external storage locations through Internet, Bluetooth^{®}, and the like. The apparatus 300 may also receive the multimedia content from the memory 304.

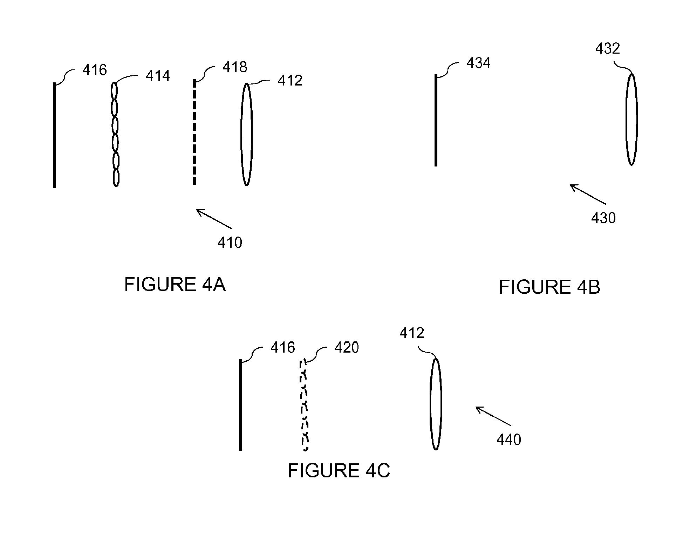

In an embodiment, the apparatus 300 may be configured to receive a first image having a first image resolution, and a second image having a second image resolution. In an embodiment, the first image image resolution is relatively lower than the second image image resolution. In an embodiment, the first image comprises an angular information associated with the scene. In an embodiment, the first image may be a light-field image. In an embodiment, the first image may be captured by utilizing a light-field image capturing device. In an embodiment, an example of the light-field image capturing device may be a plenoptic camera. As discussed with reference to FIGURE 1, the term 'light-field image' may refer to an infinite collection of vectors representative of the light converging at a point from all possible angles in 3D. In an embodiment, the second image is captured by utilizing an image capturing device configured to capture high image resolution images. In an embodiment, the first image and the second images may be captured by utilizing two different capturing devices, for example, a high resolution image capturing device and a light-field image capturing device, respectively. In an embodiment, the first image and the second image may be captured by a multimedia capturing device configured to capture both of the high resolution image and the light-field image. An arrangement of an image capturing device configured to capture the first image and the second image is illustrated and explained with reference to FIGURES 4A and 4B.

In an embodiment, the angular information associated with the scene may be utilized in determining a depth map of the scene. As used herein, the 'depth map' may be construed as referring to a map illustrating distance between objects of an image. Additionally, the pixels of the image may be represented by a numerical integer values on the depth map. In an embodiment, the depth map of the scene may be generated based on a determination of feature points associated with the scene. Examples of the feature points may include, but are not limited to, corners, edges of an image, or other region of interest such as background of the scene. In an example embodiment, the apparatus 300 is caused to generate a 3-D image of the scene based on the depth map.

In an embodiment, a first region of interest (ROI) in the first image may be selected. In an embodiment, the first ROI in the first image may include that portion of the image which is desired to be sharpened. In an embodiment, the first ROI may refer to a portion of the image for which the image resolution is to be increased. For example, a scene may show an animal running across trees, and the user may wish to focus/enhance animal in the image, while the image of trees in the background blurred. In such a scenario, the portion of the image associated with the animal may be selected as the first ROI. In an embodiment, the selection of the first ROI may be performed based on a user action. In an embodiment, the user action may be performed on a user interface, for example the user interface 306. In an embodiment, the user action may include a mouse click, a touch on a display of the user interface, a gaze of the user, and the like. In an embodiment, the selected first ROI may appear highlighted on the user interface. In an embodiment, the first image may be pre-processed to generate an image having selectively sharp and blurred/dull features.

In an embodiment, the processor 302 is configured to, with the content of the memory 304, and optionally with other components described herein, to cause the apparatus 300 to generate a pre-processed first image based on the angular information and a selection of the first ROI in the first image. In an embodiment, the pre-processed first image comprises one of a partially refocused image, a fully refocused image, and an angular view refocused image. For example, the pre-processed first image comprising partially blurred and partially sharp objects may be referred to as a 'partially refocused image'. In an embodiment, for generating the refocused image, one or more portions of/objects in the first image may be selected as the ROI. Also, the pre-processed first image comprising completely sharp objects may be referred to as 'fully refocused image'. In an embodiment, for generating the fully focussed image, the entire first image may be selected as the ROI. Moreover, the pre-processed first image being generated based on different angular view captures of an object may be referred to as 'angular view refocused image'. In an embodiment, exemplary partially refocused images, and fully refocused image are illustrated and explained in detail with reference to FIGURES 5A, 5B and 5C.

In an example embodiment, the processor 302 is configured to, with the content of the memory 304, and optionally with other components described herein, to cause the apparatus 300 to generate a processed first image of the scene based on a processing of a second ROI in the pre-processed first image corresponding to the first ROI in the first image, and the second image. In an embodiment, processing of the pre-processed first image and the second image comprises super-resolving the pre-processed first image. As used herein, the term 'super-resolving' may be construed as referring to a process of combining multiple images with overlapping fields of view to generate a high-resolution image, for example the processed image. In an embodiment, a super resolution of the pre-processed first image is performed so as to add the details to the selected ROI in the pre-processed image from the corresponding portions of the second image, thereby enhancing the image resolution of the first ROI in the pre-processed first image.

In an embodiment, the processor 302 is configured to, with the content of the memory 304, and optionally with other components described herein, to cause the apparatus 300 to perform the processing of the pre-processed first image and the second image by scaling-up the pre-processed first image based on a size of the second image. Additionally, in an embodiment, the scaled-up preprocessed image may be processed by performing a band-pass filtering to thereby generate a filtered first pre-processed image. In an embodiment, the second image may be processed by performing a high-pass filtering of the second image to generate a high pass filtered second image. Also, in an embodiment, a band-pass filtering of the second image is performed to generate a band-pass filtered second image.

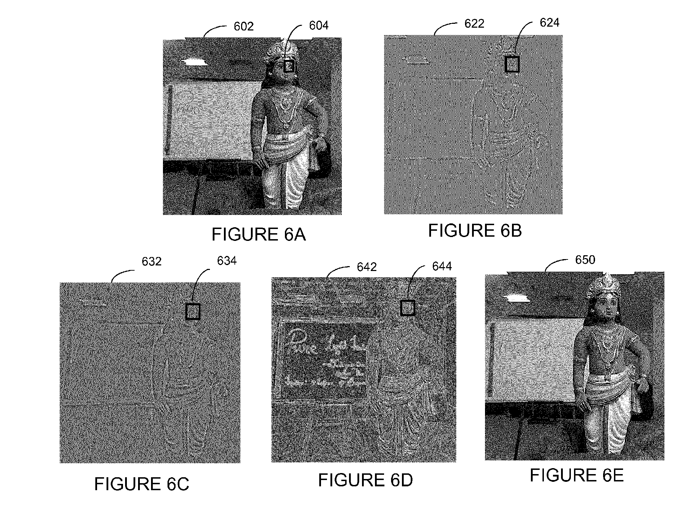

In an embodiment, the processor 302 is configured to, with the content of the memory 304, and optionally with other components described herein, to cause the apparatus 300 to perform a pairwise matching between the second ROI and the second image. In an embodiment, based on a pairwise matching, at least one matching region in the band pass second image having a robust match with a corresponding region in the first ROI in the pre-processed first image is determined. In an embodiment, the at least one robust matching region in the band pass second image may have a high image resolution as compared to the image resolution of the region in the first ROI in the pre-processed first image. In an embodiment, the at least one robust matching region in the band pass second image may include frequency information associated with the high image resolution. In an embodiment, the processor 302 is configured to, with the content of the memory 304, and optionally with other components described herein, to cause the apparatus 300 to append the frequency information of the high image resolution of the region in the matching region in the band pass second image to the first ROI in the pre-processed first image, thereby enhancing the image resolution of the selection first ROI in the pre-processed first image. An example embodiment illustrating the super-resolution of the pre-processed first image, and a pairwise matching between the band pass second image and the filtered first pre-processed image is illustrated and described with reference to FIGURES 6A through 6E.

In some example embodiments, an apparatus such as the apparatus 300 may comprise various components such as means for receiving a first image of a scene, the first image comprising an angular information associated with the scene, the first image having a first image resolution; means for receiving a second image of the scene, the second image having a second image resolution, the second image resolution being greater than the first image resolution; means for generating a pre-processed first image based on the angular information and a selection of a first region of interest (ROI) in the first image; and means for generating a processed first image of the scene based on a processing of a second ROI in the pre-processed first image corresponding to the first ROI in the first image, and the second image. Such components may be configured by utilizing hardware, firmware and software components. Examples of such means may include, but are not limited to, the processor 302 along with the memory 304, the UI 306, and the image sensor 308.

In an example embodiment, the means for determining the angle of rotation comprises means for: means for generating the processed first image comprises: means for performing a high pass filtering of the second image to generate a high pass filtered second image; means for performing a band pass filtering of the second image to generate a band pass filtered second image; means for performing a band pass filtering of the first pre-processed image to generate a filtered first pre-processed image; and means for performing a pairwise matching between the band pass filtered second image and the filtered first pre-processed image. Examples of such means may include, but are not limited to, the processor 302 along with the memory 304, the UI 306, and the image sensor 308.

In an example embodiment, the means for performing the pairwise matching comprises: means for selecting a region in the second ROI of the filtered first pre-processed image; and means for determining a matching region in the band pass second image corresponding to the region in the second ROI. Examples of means for performing the pairwise matching may include, but are not limited to, the processor 302 along with the memory 304, the UI 306, and the image sensor 308. Some embodiments of processing multimedia content are further described in FIGURES 4A to 8.

FIGURES 4A, 4B and 4C illustrate example configurations of a device for capturing a first image and a second image, in accordance with an embodiment. In an embodiment, during a first configuration 410 (illustrated in FIGURE 4A), the device is configured to capture a light-field image while during the second configuration, the device is configured to capture a high resolution image.

Referring to FIGURE 4A, the first configuration 410 the device is shown to include a single optical element 412, an array of micro lenses 414, and an image sensor 416. The array of micro lenses 414 are configured to create a map of light intensity at an image plane, for example image plane 418. In an embodiment, the array of micro lenses 414 may be configured at a minute distance from the image sensor 416. In an embodiment, the image senor 416 may be a charge-coupled device (CCD). In an embodiment, the image sensor 416 may be same as the image sensor 308.

In an embodiment, the rays of light may be incident at the optical element 412, thereby generating an image at an image plane at a focal distance from the optical element 412. Each micro-lens may split a beam coming towards it from the optical element 412 into rays coming from different "pinhole" locations on the aperture of the optical element 412. Each of these rays may be recorded as a pixel on the image sensor 416, and the pixels under each micro-lens may collectively form an n-pixel image. The n-pixel region under each array of lens may be referred to as a macro-pixel, and the device may generate a micro-image at each macro-pixel. The light-field image captured by the device may generated a plurality of micro-images of a scene. An exemplary light-field image is illustrated and described in FIGURE 1. In an embodiment, the light-field image may be pre-processed for generating a pre-processed image, for example, one of a partially refocused image, a fully refocused image and an an angular view refocused image. An example embodiment illustrating a partially refocused image, a fully focussed image and an angular view image are illustrated and explained with reference to FIGURES 5A through 5C.

Referring now to FIGURE 4B, the second configuration 430 (for capturing the second image) of the device is shown to include an optical element 432, and an image sensor 434. The optical element 432 is configured to transmit and refract light rays received at a surface thereof. The optical element 432 may receive a plurality of light rays, and in response generate a focused collimated beam travelling to a point, such as focal point, to thereby generate an optical image at the focal point. In an embodiment, the focal point is located at a distance equivalent to a focal distance from the optical element 432. In an embodiment, the optical element 432 may be an objective lens. In an embodiment, the image sensor 434 is located at the focal distance from the optical element 432. In an embodiment, the image sensor 434 is configured to convert the optical image into an electrical signal. In an embodiment, the electrical signal is associated with an image captured with a high image resolution. In the second configuration, the device is configured to capture a two-dimensional (2D) image representing a total amount of light that strikes each point the an image sensor 434. The 2D image may have a second image resolution. In an embodiment, the second image resolution may be greater than the first image resolution. However, this 2D image contains no information about the directional distribution of the light that strikes the image sensor 434.

In an embodiment, the first configuration 410 and the second configuration 430 are configured to capture a light-field image and a high-resolution image, respectively associated with a scene. As explained herein, the light field image may be capture by a light-field image capturing device, while the high-resolution image may be captured by an image capturing device configured to capture high-resolution images. In the present embodiment, the light-field image capturing device and the high-resolution image capturing device may be configured in different devices.

In another embodiment, the first configuration 410 and the second configuration 430 may be accomplished in a single device by providing retractable array of micro-sensors, for example as illustrated in FIGURE 4C. Referring to FIGURE 4C, a third configuration 440 of the device is illustrated. In the third configuration, the device is operable in a retracted mode for facilitating capture of the second image. In the present embodiment, the device is shown to include the optical element 412, and an array of retractable micro lenses 420, and an image sensor 416 for capturing the first image. In an embodiment, the retractable array of micro-sensors 420 may be retracted, thereby accomplishing the configuration of the device for capturing the high-resolution image. In an embodiment, for facilitating capture of the first image, the device is configured to be operable in a deployed mode (for example, as illustrated in FIGURE 4A).

FIGURES 5A, 5B and 5C illustrate example pre-processed first images, such as a partially refocused images and fully refocused image, in accordance with an embodiment. As explained with reference to FIGURE 3, the first image may be a light-field image (for example, the light-field image 102 illustrated in FIGURE 1). In an embodiment, the first image may be pre-processed such that a refocused 2D image may be reconstructed from the light-field image. As is illustrated in FIGURE 5A, a partially refocused image 502 may comprise a ROI that may be selected to be shown as sharp, while the rest of the image may be shown as blurred. For example, in FIGURE 5A, the ROI 504 is a background portion of the image 502, while a front portion 506 of the image 502 is blurred. Also, as illustrated in example of FIGURE 5B, a partially refocused image 512 comprises a front portion 514 of the image 512 as the ROI, while the background portion 516 is blurred. Referring to a fully refocused image 520 FIGURE 5C, both the front portion 522 as well as the background portion 524 of the image 520 are selected as ROI, such that the front portion 522 and the background portion 524 may be made sharp. In an embodiment, the ROI may be selected based on a depth map of the image. In an embodiment, the 'depth map' may be construed as referring to a map illustrating distance between objects of an image.

In an embodiment, the selection of the ROI in the first image may be performed by a user action. In an embodiment, the user action may be performed on a user interface, for example the user interface 306. In an embodiment, the user action may include a mouse click, a touch on a display of the user interface, a gaze of the user, and the like. In an embodiment, the selected at least one object may appear sharp on the user interface.

FIGURES 6A-6E illustrates an example images for processing of images associated with a multimedia content, in accordance with an embodiment. As illustrated in FIGURE 6A, an image 602 is considered for performing super-resolution. The image 602 is a pre-processed first fully focussed image. In an embodiment, an entire region of the pre-processed first image 602 may be a first ROI. For example, a region marked as 604 may be a portion of the first ROI. As already discussed, the first ROI 604 may be the portion of the first image that is to be converted to a high image resolution from the low image resolution.

For performing super resolution, a band pass filtering may be performed on the pre-processed first image 602 to generate a filtered first pre-processed image 622. For example, a filtered first pre-processed image 622 corresponding to the pre-processed first image 602 is illustrated with reference to FIGURE 6B. Also, the filtered first pre-processed image 622 is shown to include a ROI 624 corresponding to the first ROI 604. In an embodiment, prior to performing the band pass filtering of the pre-processed first image, the pre-processed first image may be scaled-up based on the size of a second image associated with the scene. In an embodiment, the second image may be a high resolution image associated with the scene.

In an embodiment, a band pass filtering of the second image may be performed to generate a band pass filtered second image, for example, a band pass filtered second image 632, as illustrated in FIGURE 6C. Additionally, a high pass filtering of the second image is performed to generate a high pass filtered second image, for example a high pass filtered second image 642 as illustrated in FIGURE 6D. In an embodiment, for performing the super resolution of the first image and the second image, a pairwise matching is performed between the band pass filtered second image 632 and the filtered first pre-processed image 622. In an embodiment, for performing the pairwise matching, a second ROI 624 in the filtered first pre-processed image 622 is selected, wherein the second ROI is corresponding to the first ROI 604 in the pre-processed first image 602. In an embodiment, the second ROI 624 may be positioned at a location, for example, P(x,y) in the filtered first pre-processed image 622. In an embodiment, a patch may be selected of size, for example, MXM around each pixel in the area corresponding to the location P(x,y) in the band pass filtered second image 632. For example, in the band pass filtered second image 632, a patch corresponding to the location P(x,y) may be a patch 634, as illustrated in FIGURE 6C. In an embodiment, a matching region is determined in the patch 634 of the band pass filtered second image 632 that may provide a robust matching patch between the second ROI 624 and the patch 634. In an embodiment, the robust matching patch may be determined based on the depth map associated with the scene. In an example embodiment, the robust matching patch may be located at a location such as P'(x_{robustpatch}, y_{robustpatch}) in the patch 634 in the band pass second image 632.

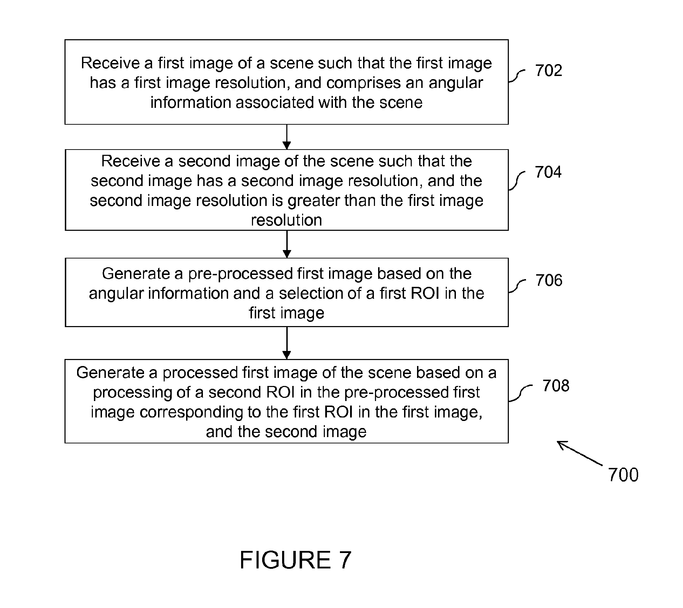

In an embodiment, a patch, for example a patch 644 corresponding to the P'(x_{robustpatch}, y_{robustpatch}) is determined in the high pass filtered second image 642, and a high frequency information associated with the patch is determined from the high pass filtered second image 642. In an embodiment, the determined high frequency information may be utilized for appending the high resolution details to the ROI of 604 of the pre-processed first image 602, to thereby generate a high resolution light-field image. Referring to FIGURE 6E, a processed image 650 is illustrated. As illustrated in FIGURE 6E, the processed (or super-resolved) image is generated based on super-resolving the pre-processed first image 602. A method for processing of the multimedia content is described in detail with reference to FIGURE 7.

FIGURE 7 is a flowchart depicting an example method 700 for processing of multimedia content, in accordance with an example embodiment. The method depicted in the flow chart may be executed by, for example, the apparatus 300 of FIGURE 3. It may be understood that for describing the method 700, references herein may be made to FIGURES 1 through 6E. In some embodiments, the processed image may be generated by processing of a first image and a second image to generate a light-field image having a high image resolution. In an embodiment, the term high image resolution may be construed as referring to an image having exhaustive details of the scene captured in the image. In some embodiments, the plurality of images may be captured by an multimedia capturing device, or may be retrieved from a memory of a device, for example, the device 200 (refer to FIGURE 2) for processing the first image and the second image.

At block 702, the first image of the scene is received. In an embodiment, the first image has a first image resolution. In an embodiment, the first image is a light-field image. The light-field image comprises an angular information, for example, a four dimension (4D) information of all the light rays associated with a scene in 3D. An exemplary light field image is illustrated with reference to FIGURE 1. In an embodiment, the first image may be captured by a light-field image capturing device. An example of the light-field image capturing device may include a plenoptic camera.

At block 704, the second image of the scene is received. In an embodiment, the second image may have a second image resolution such that the second image resolution is greater than the first image resolution. In an embodiment, the second image may be captured by an image capturing device configured to capture high resolution images. Examples of the device include a multimedia capturing and recording device, for example a camera, a cell phone, a PDA, and the like.

At block 706, a pre-processed first image is generated based on the angular information and a selection of a first ROI in the first image. In an embodiment, the first ROI may refer to a portion in an image that may be selected based on a user-interest. For example, in an image comprising picture of a group of six individuals, it may be desired to sharpen only a single image, and render the remaining images dull. In such a scenario, the first ROI may include the portion of the first image that is to be sharpened. In an embodiment, the first ROI is selected in the first image. Based on the selection of the first ROI, the first image is pre-processed to generate the pre-processed image. In an embodiment, the pre-processed may be one of a partially refocused image, a fully refocused image and an angular view refocused image. Various examples of the pre-processed images are explained and illustrated with reference to FIGURES 5A, 5B and 5C.

At block 708, a processed first image of the scene is generated based on a processing of a second ROI in the pre-processed first image corresponding to the first ROI, and the second image. In an embodiment, the second ROI may have a lower image resolution as compared to a corresponding portion of the image in the second image. In an embodiment, during the processing, the pre-processed first image is super-resolved such that the image resolution of the second ROI is converted from the low image resolution to the high image resolution. An example embodiment explaining and illustrating the process of super-resolution of the pre-processed first image is discussed in detail with reference to FIGURES 6A through 6E.

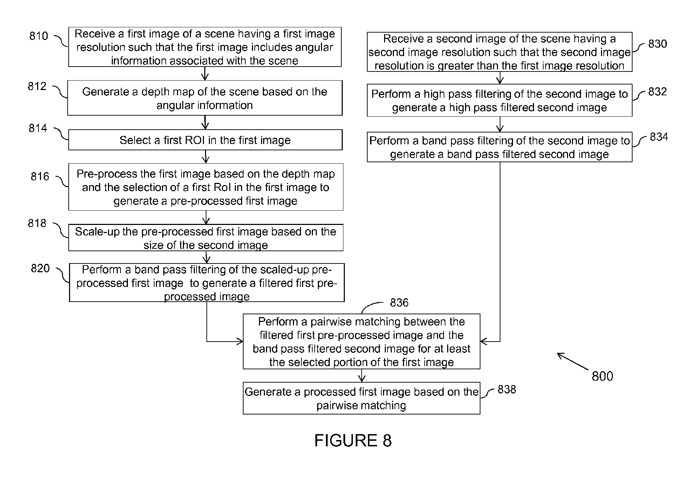

In an example embodiment, a processing means may be configured to perform some or all of: means for receiving a first image of a scene, the first image comprising an angular information associated with the scene, the first image having a first image resolution; means for receiving a second image of the scene, the second image having a second image resolution, the second image resolution being greater than the first image resolution; means for generating a pre-processed first image based on the angular information and a selection of a first region of interest (ROI) in the first image; and means for generating a processed first image of the scene based on a processing of a second ROI in the pre-processed first image corresponding to the first ROI in the first image, and the second image. An example of the processing means may include the processor 302, which may be an example of the controller 208. Another method for generating a processed multimedia content is explained in detail with reference to FIGURE 8.

FIGURE 8 illustrates a flowchart depicting an example method 800 for processing of multimedia content, in accordance with another example embodiment. In an embodiment, the term multimedia content may be construed as inclusive of image content, video content, and the like. In an embodiment, processing the multimedia content may include processing of images. In another embodiment, processing the multimedia content may include processing of video content. The method 800 depicted in flow chart may be executed by, for example, the apparatus 300 of FIGURE 3. Operations of the flowchart, and combinations of operation in the flowchart, may be implemented by various means, such as hardware, firmware, processor, circuitry and/or other device associated with execution of software including one or more computer program instructions. For example, one or more of the procedures described in various embodiments may be embodied by computer program instructions. In an example embodiment, the computer program instructions, which embody the procedures, described in various embodiments may be stored by at least one memory device of an apparatus and executed by at least one processor in the apparatus. Any such computer program instructions may be loaded onto a computer or other programmable apparatus (for example, hardware) to produce a machine, such that the resulting computer or other programmable apparatus embody means for implementing the operations specified in the flowchart. These computer program instructions may also be stored in a computer-readable storage memory (as opposed to a transmission medium such as a carrier wave or electromagnetic signal) that may direct a computer or other programmable apparatus to function in a particular manner, such that the instructions stored in the computer-readable memory produce an article of manufacture the execution of which implements the operations specified in the flowchart. The computer program instructions may also be loaded onto a computer or other programmable apparatus to cause a series of operations to be performed on the computer or other programmable apparatus to produce a computer-implemented process such that the instructions, which execute on the computer or other programmable apparatus provide operations for implementing the operations in the flowchart. The operations of the method 800 are described with help of apparatus 300. However, the operations of the method can be described and/or practiced by using any other apparatus.

Referring now to FIG. 8, at block 810, the method 800 includes receiving a first image having a first image resolution. In an embodiment, the first image is a light-field image. The light-field image comprises an angular information, for example, a four dimension (4D) information of all the light rays associated with a scene in 3D. An exemplary light field image is illustrated with reference to FIGURE 1. At block 830, a second image is received. The second image may have a second image resolution. In an embodiment, the second image resolution is greater than the first image resolution. In an embodiment, the first image may be captured by a light-field image capturing device such as a plenoptic camera, while the second image may be captured by a high resolution image capturing device such as a camera, a PDA, a computer.

In an embodiment, the light-field image capturing device and the high resolution image capturing device may be configured in a single device, for example, the device 200 (refer FIGURE 2). In an embodiment, the first image and the second image may be captured by first capturing the first image, and thereafter retracting an array of micro-lenses associated with the light-field image capturing device. In an embodiment, an array of micro-lenses configured in the light-field image capturing device may facilitate in capturing the light-field image. Capturing of a light-field image and the high-resolution image is explained with reference to FIGURES 4A, 4B and 4C.

At block 812, a depth map associated with the scene may be generated based on the angular information. The depth map may refer to a map of relative distance between the various objects associated with the scene. In an embodiment, the depth may be generated by utilizing the feature points associated with a scene. In an embodiment, the examples of the feature points may include, but are not limited to, corners, edges of an image, or other region of interest such as background of the scene.

At block 814, a first ROI is selected in the first image. In an embodiment, the first ROI may be a region in the first image that may be required to be associated with higher image resolution. In an embodiment, the ROI may be selected based on a user action. In an embodiment, the user action may be performed on a user interface, such as a UI 306. Examples of the user action may include, but are not limited to, mouse click, a touch on a display of the user interface, a gaze of the user, and the like. In an embodiment, the selected first ROI may appear sharp on the user interface. At block 816, the first image may be pre-processed based on the depth map and the selection of the first ROI of the first image. In an embodiment, the pre-processed first image may be one of a partially refocused image, a fully refocused image, and an angular view refocused image. At block 818, the pre-processed first image may be scale-up based on the size of the second image. At block 820, a band pass filtering of the scaled-up pre-processed first image is performed to generate a filtered first pre-processed image.

At block 832, a high pass filtering of the second image may be performed to generate a high pass filtered second image. Additionally, a band pass filtering of the second image may be performed to generate a band pass filtered second image at block 834. It will be noted that the blocks 832 and 834 may be performed simultaneous or in an order. Also, the order need not be limited to the order shown. At block 836, a pairwise matching may be performed between the filtered first pre-processed image (generated at block 820) and the band pass filtered second image (generated at block 834). An example embodiment illustrating the pairwise matching is described with reference to FIGUREs 6A through 6E. At block 838, a processed first image is generated based on the pairwise matching performed at block 836. In an embodiment, the processing is configured to render the second image resolution to the second ROI in the pre-processed first image to thereby generate the processed first image. In an embodiment, the processed first image comprises the light-field image having a high resolution.

To facilitate discussion of the method 800 of FIGURE 8, certain operations are described herein as constituting distinct steps performed in a certain order. Such implementations are exemplary and non-limiting. Certain operations may be grouped together and performed in a single operation, and certain operations can be performed in an order that differs from the order employed in the examples set forth herein. Moreover, certain operations of the method 800 are performed in an automated fashion. These operations involve substantially no interaction with the user. Other operations of the method 800 may be performed by in a manual fashion or semi-automatic fashion. These operations involve interaction with the user via one or more user interface presentations. Various examples for generation of processed images based on the methods (such as methods 700 and 800) and devices disclosed herein are described with reference to FIGURES 7 and 8.

Without in any way limiting the scope, interpretation, or application of the claims appearing below, a technical effect of one or more of the example embodiments disclosed herein is to processing of multimedia content. The disclosed embodiments facilitates in generating light-field image with a high image resolution. For example, various embodiments facilitates in generating light-field images of a scene at various view angles, selective object refocus and fully refocused image. In an embodiment, the light-field image may be super-resolved by determining the details of the objects in the image from high resolution image corresponding to the scene. In an embodiment, the light-field image is registered with the high resolution image, thereby reducing the computation complexity of the method for processing the images. Additionally, the disclosed method precludes the need of a large number of sensors to register multiple high resolution images using the light field camera capture setup.

Various embodiments described above may be implemented in software, hardware, application logic or a combination of software, hardware and application logic. The software, application logic and/or hardware may reside on at least one memory, at least one processor, an apparatus or, a computer program product. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of an apparatus described and depicted in FIGURES 2 and/or 3. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications, which may be made without departing from the scope of the present disclosure as defined in the appended claims.

## Claims

1. A method comprising:
receiving a first image of a scene, the first image comprising an angular information associated with the scene, the first image having a first image resolution;
receiving a second image of the scene, the second image having a second image resolution, the second image resolution being greater than the first image resolution;
generating a pre-processed first image based on the angular information and a selection of a first region of interest (ROI) in the first image; and
generating a processed first image of the scene based on a processing of a second ROI in the pre-processed first image corresponding to the first ROI in the first image, and the second image,
wherein the processing is configured to render the second image resolution to the second ROI in the pre-processed first image.

2. The method as claimed in claim 1, wherein the first image comprises a light field image associated with the scene.

3. The method as claimed in claim 1, wherein the pre-processed first image comprises one of a partially refocused image, a fully refocused image, and an angular view refocused image.

4. The method as claimed in claim 1, wherein generating the processed first image comprises super-resolving the pre-processed first image based on the second image.

5. The method as claimed in claims 1 or 4, wherein generating the processed first image comprises:
performing a high pass filtering of the second image to generate a high pass filtered second image;
performing a band pass filtering of the second image to generate a band pass filtered second image;
performing a band pass filtering of the first pre-processed image to generate a filtered first pre-processed image; and
performing a pairwise matching between the band pass filtered second image and the filtered first pre-processed image.

6. The method as claimed in claim 5, further comprising scaling the first pre-processed image based on a size of the second image to generate a scaled first pre-processed image prior to performing the band pass filtering of the first pre-processed image.

7. The method as claimed in claims 5 or 6, wherein performing the pairwise matching comprises:
selecting a region in the second ROI of the filtered first pre-processed image; and
determining a matching region in the band pass second image corresponding to the region in the second ROI.

8. The method as claimed in claim 7 further comprising:
determining a high frequency information from the matching region in the band pass second image; and
providing the high frequency information to the second ROI of the filtered first pre-processed image.

9. The method as claimed in claims 6 or 7 further comprising registering the first pre-processed image with the second image prior to performing the pairwise matching.

10. An apparatus configured to:
receive a first image of a scene, the first image comprising an angular information associated with the scene, the first image having a first image resolution;
receive a second image of the scene, the second image having a second image resolution, the second image resolution being greater than the first image resolution;
generate a pre-processed first image based on the angular information and a selection of a first region of interest (ROI) in the first image; and
generate a processed first image of the scene based on a processing of a second ROI in the pre-processed first image corresponding to the first ROI in the first image, and the second image,
wherein the processing is configured to render the second image resolution to the second ROI in the pre-processed first image.

11. The apparatus as claimed in claim 10, wherein the apparatus is further configured to perform the method as claimed in any of claims 2 to 9.

12. The apparatus as claimed in claims 10 and 11, wherein the apparatus comprises a communication device.

13. The apparatus as claimed in any of claims 10 to 12, wherein the apparatus comprises a retractable array of micro-sensors, the retractable array of micro-sensors configured to operate in one of:
a retracted mode for facilitating capture of the second image, and
a deployed mode for facilitating capture of the first image.

14. A computer program product comprising program instructions which when executed by an apparatus cause the apparatus to perform the method as claimed in any of claims 1 to 9.
